# EUROPÄISCHE PATENTSCHRIFT

(11) **EP 1 062 773 B1**
(45) Veröffentlichungstag und Bekanntmachung des Hinweises auf die Patenterteilung: **18.05.2005**
(21) Anmeldenummer: 99910265.0
(22) Anmeldetag: 23.02.1999
(51) Int. Cl.: H04L 12/44

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810288
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE)
(86) Internationale Anmeldenummer: PCT/EP1999/001172
(87) Internationale Veröffentlichungsnummer: WO 1999/046896

(56) Entgegenhaltungen:
- WO-A-90/09710
- DE-A- 3 503 364
- DE-A- 4 010 574
- US-A- 4 561 091
- US-A- 4 644 587
- TOMINAGA H. ET AL: '"A Network Architecture with Distributed Switching Function for Optical Fiber Links"' PROCEEDINGS COMPUTER NETWORKS COMPCON 82 FALL 20 September 1982 - 23 September 1982, WASHINGTON US, Seiten 478 - 483

## Beschreibung

Die Erfindung bezieht sich auf einen Datenbus für mehrere Teilnehmer, die über mindestens eine elektrische Leitung untereinander Datentelegramme austauschen.

Die Leitung kann Bestandteil eines Stemkopplers sein. Ein derartiger Datenbus ist aus der nicht vorveröffentlichten deutschen Patentanmeldung DE 197 20 401 A1 bekannt.

Über den schaltungstechnischen Aufbau des Datenbusses ist eine konkrete Angabe darin nicht enthalten.

Eine schaltungstechnische Realisierung eines derartigen Datenbusses ist in Form einer Open-Collector-Schaltung möglich. Eine Open-Collector-Schaltung hat den Nachteil, dass bei hohen Übertragungsraten und vielen Busteilnehmern ein relativ kleiner Widerstandswert als Kollektorwiderstand eingesetzt werden muss, um eine ausreichende Flankensteilheit der in Pulsform vorliegenden Signaltelegramme zu erzielen. Das führt zu hohen Strömen und der Notwendigkeit des Einsatzes von Leistungstransistoren und -widerständen sowie zu hohen Verlustleistungen.

Ein weiteres Problem ergibt sich dann, wenn zumindest ein Teil der Teilnehmer optische Telegramme liefert. Insbesondere bei einer großen Zahl von Busteilnehmern ist eine Signalverstärkung erforderlich, um alle Teilnehmer in ausreichender Qualität mit den Telegrammen zu versorgen. Hierfür bietet es sich an, die Telegramme in elektrische Form umzuwandeln, diese zu verstärken und in optische Form rückzuverwandeln. Durch die zweimalige Umwandlung mit zusätzlicher Signalverstärkung treten aber Signalverzerrungen auf, die den Wirkungsgrad des Datenbusses verringern.

Für einen Datenbus, der als Open-Collector-Schaltung ausgebildet ist, ist es bekannt, Signalformbearbeitungseinrichtungen vorzusehen (vgl. US 5,684,831 A). Dabei ist für jeden Teilnehmer eine derartige Einrichtung vorgesehen. Gerade bei einer Vielzahl von Teilnehmern ergibt sich dadurch ein hoher schaltungstechnischer Aufwand.

Der Erfindung liegt die Aufgabe zugrunde, einen Datenbus der eingangs genannten Art zu schaffen, der auch bei einer großen Zahl von optischen Busteilnehmern mit schaltungstechnisch geringem Aufwand eine störungsfreie Buskommunikation ermöglicht.

Die Erfindung löst diese Aufgabe mit den Merkmalen des Patentanspruchs.

Die Erfindung besteht im wesentlichen aus dem logischen Entscheidungsglied und der Signalaufbereitungsschaltung und deren Zusammenwirken. Das Entscheidungsglied erfordert bei seinem Einsatz keine aufwendigen Signalformbearbeitungseinrichtungen. Es überträgt die Signale in ihrer Form unverändert. Sowohl zu den anderen Teilnehmern, als auch zum sendenden Teilnehmer zurück. Im Gegensatz dazu wird bei einem aus der WO 90/09710 A bekannten Datenbus der an einem Eingang eines beliebigen Tores anstehende Signalstrom nur an die Ausgänge aller anderen Tore weitergegeben. Die Empfänger der anderen Tore werden für die Dauer des Signalstroms gegen einlaufende Signale blockiert. Dieser Datenbus unterscheidet sich in seiner Funktion grundsätzlich vom erfindungsgemäßen, da es dem jeweils sendenden Teilnehmer nur beim erfindungsgemäßen Datenbus möglich ist, anhand des zurückgelieferten Signals den Anfang und das Ende des Sendebetriebs zu erkennen.

Auch ist der erforderliche Leistungsbedarf auch bei einer großen Anzahl von Teilnehmern gering. Das logische Entscheidungsglied erlaubt es auch, den schaltungstechnischen Aufwand für die Signalaufbereitung drastisch zu reduzieren. Es ist nur noch erforderlich, zwischen dem Entscheidungsglied und den Eingängen der Teilnehmer eine einzige Signalaufbereitungsschaltung anzuordnen, die das Ausgangssignal des Entscheidungsglieds hinsichtlich der Pulsform modelliert.

Dabei kann es sich um eine Angleichung der Form des Ausgangssignals an die Form der Eingangssignale oder aber auch um eine Anpassung handeln, wie sie in der US 5,684,831 A beschrieben ist. Dabei werden die Anstiegsflanken abgeflacht, um die Nutzsignale von hochfrequenten Störsignalen mit extremer Flankensteilheit unterscheiden zu können.

Ausgestaltungen der Erfindung sind sowohl mit Teilnehmern möglich, die elektrische Datentelegramme liefern, als auch mit Teilnehmern, die optische Datentelegramme erzeugen. Die zuletzt genannten Teilnehmer sind über opto-elektrische Wandler in der Weise am Datenbus angeschlossen, dass die Signalausgänge der Teilnehmer über je einen derartigen Wandler auf das Entscheidungsglied geführt sind und der Ausgang des Entscheidungsglieds über einen gemeinsamen elektrisch-optischen Wandler oder aber über individuelle derartige Wandler auf die Eingänge der Teilnehmer geführt ist.

Ein derartiger Datenbus ist aus dem Artikel "A Network Architecture with Distributed Switching Function for Optical Fiber Links", Proceedings Computer Networks Compcon 82 Fall, 10.-23. September 1982, p.478-483, XP002107869, bekannt. Gerade bei einer Vielzahl von Teilnehmern ist der Leistungsbedarf abhängig von der Zahl der Teilnehmer hoch, da dieser Datenbus physikalisch ein derartiges integriertes Entscheidungsglied nicht enthält. Bei diesem Datenbus ist jeder Teilnehmer mit seinem Ausgang an den Eingängen aller anderen Teilnehmer angeschlossen mit der Folge eines hohen Ausgangsteistungsbedarfs jedes Teilnehmers gerade bei einer Vielzahl von Teilnehmern, da dieser Bedarf mit der Zahl der Teilnehmer steigt. Im Gegensatz dazu ist bei der Erfindung der Leistungsbedarf innerhalb des Sternkopplers unabhängig von der Zahl der Teilnehmer und aufgrund der Verwendung eines physikalischen Entscheidungsgliedes gering.

Anhand der Zeichnung ist die Erfindung weiter erläutert. Es zeigt
Fig. 1 schematisch den Aufbau eines erfindungsgemäßen Datenbusses, der für eine Vielzahl von Busteilnehmern mit geringem schaltungstechnischen Aufwand eine sichere Buskommunikation erreicht, und
Fig. 2 eine weitere Ausführungsform der Erfindung.

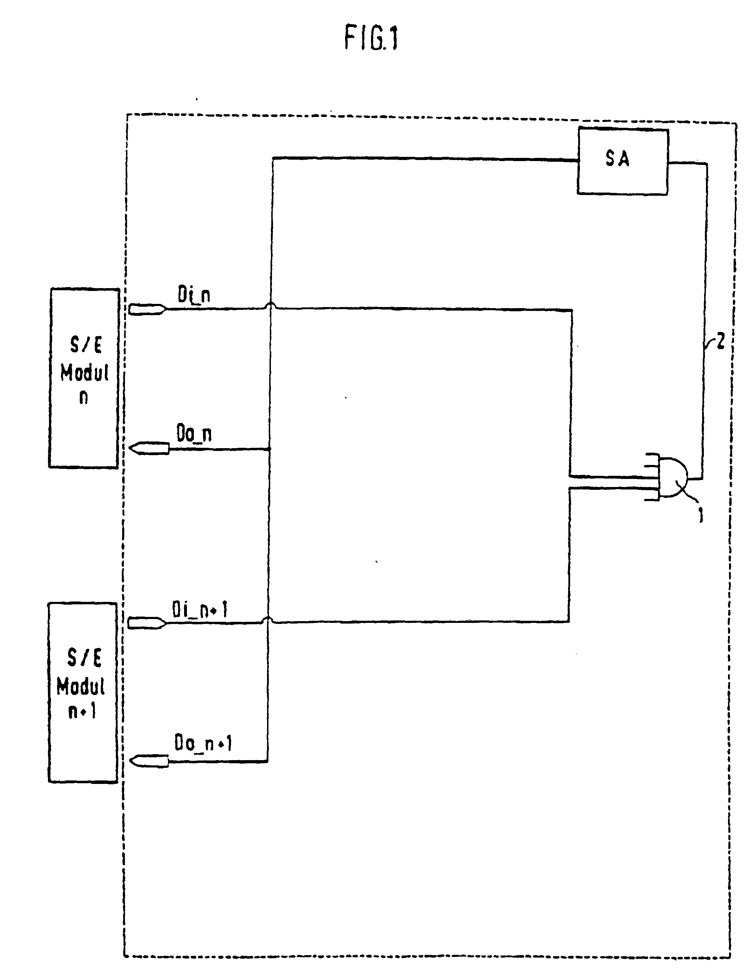

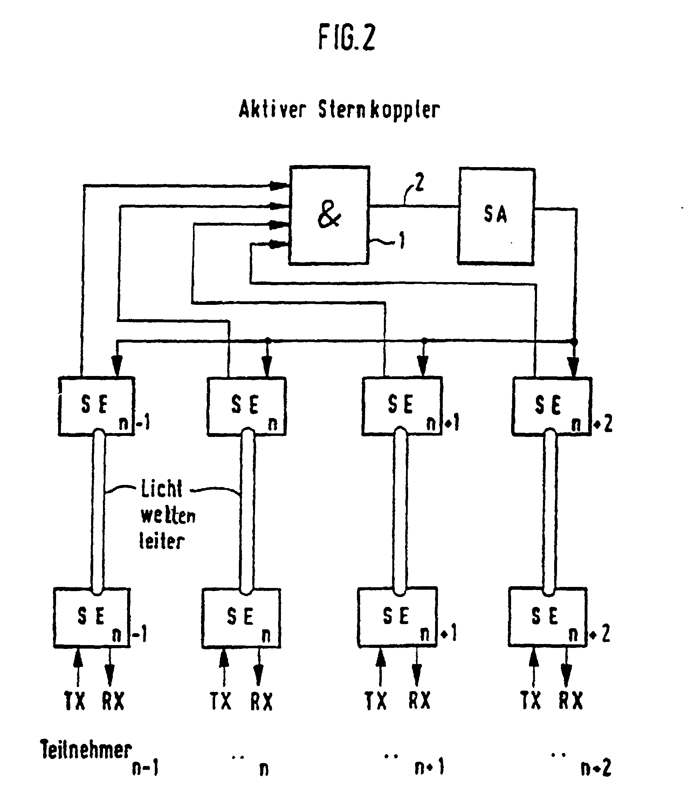

Ein ausschnittsweise in Fig. 1 und 2 gezeigter Datenbus dient dazu, Teilnehmer miteinander zu verbinden, die optische Telegramme liefern. DieTelegramme der Teilnehmer (der Übersichtlichkeit halber sind in Fig. 1 zwei Teilnehmer Tₙ und Tₙ₊₁ angedeutet) sind auf Eingänge von optoelektronischen Signalwandlern S/Eₙ und S/Eₙ₊₁ als Eingangssignale geführt. Die elektrischen Ausgangssignale (Di_{_n}, Di_{_n+1}) dieser Wandler werden mit einem UND-Gatter 1 verknüpft. Die Zahl der Eingänge des Gatters entspricht der Anzahl der Busteilnehmer. Der Ausgang 2 des UND-Gatters1 treibt alle Eingänge (Doₙ, Doₙ₊₁) der Wandler S/Eₙ und S/Eₙ₊₁.Diese liefern pulsförmige optische Ausgangssignale, die über die nicht gezeigten optischen Übertragungsstrecken diese Telegramme zu den Teilnehmern liefern.

Auf diese Weise erhält jeder Teilnehmer sowohl alle Telegramme, die von den anderen Teilnehmern aufgegeben werden als auch sein eigenes Telegramm zurück.

Wie bereits ausgeführt. hat das UND-Gatter 1 einen wesentlich geringeren Leistungsbedarf als die eingangs genannten Open-Collector-Schaltung.

Ebenfalls gezeigt ist die Verwendung einer Signalaufbereitungseinrichtung SA am Ausgang des UND Gatters1. Während der Umwandlung eines elektrischem zu einem optischen Signal entsteht eine Pulsverzerrung. Ursache hierfür ist beispielsweise der Umstand, daßl die Schwellennachführung eines optischen Empfängers nicht in unendlich kurzer Zeit erfolgen kann,oder sind auch Nichtlinearitäten von Kennlinien optischer Bauelemente.

Im gezeigten System werden pro optischer Übertragungsstrecke mit jeweils einem optoelektrischen bzw. elektrooptischen Wandler Pulsverzerrungen in der Größenordnung von 15 - 20 ns erwartet. Da die Teilnehmer über je zwei Übertragungsstrecken verbunden sind, addiert sich die Pulsverzerrung im worst case auf 30 - 40 ns. Bei einer angestrebten Datenrate von 10 Mbit/s und beispielsweise NRZ (nonreturn-to-zero) Codierung beträgt die Bitzeit 100 ns. Aufgrund der Pulsverzerrung kann ein Bit auf 60 - 70 ns Dauer "schrumpfen". Die Verzerrung summiert sich auf bis zu 30% der Signalfänge Dies führt dazu, daß ein aufwendiges Abtastverfahren mit mindestens 8-fach Abtastung verwendet werden muß, das zudem empfindlich gegenüber Quartzjitter ist.

Durch den Einsatz einer Signalaufbereitung SA am Ausgang des UND Gatters im Sternkoppler wird erreicht. daß die NRZ codierten Signale wieder in eine Form mit 100 ns Bitzeit ohne Pulsverzerrung gebracht werden.Dadurch können beispielsweise Signalformverzerrungen, wie sie durch optoelktische wandler (S/En, S/En+1) entstehen können, beseitigt werden.

Zur Signalaufbereitung in der Einrichtung SA kann z.B. das gleiche Abtastverfahren verwendet werden, das auch für die einzelnen Teilnehmer zum Einsatz kommt. Möglich ist auch, ein spezielles Signalaufbereitungsverfahren zu verwenden, das die speziellen Randbedingungen im Datenbus berücksichtigt.

Dadurch wird die Datenübertragung wesentlich robuster. Es ist möglich kurze Glitches herauszufiltern. Die Anforderungen an das Abtastverfahren in den einzelnen Teilnehmern können niedriger angesetzt werden bzw. die Toleranz gegenüber Pulsverzerrungen auf einer Übertragungsstrecke wächst. Das Abtastverfahren ist deutlich weniger anfällig gegenüber Quartzjitter. Bei gleicher Robustheit können Quarze mit niedrigerer Frequenz verwendet werden, wodurch sich Kostenvorteile ergeben.

## Patentansprüche

1. Datenbus für mehrere Teilnehmer (Tₙ, Tₙ₊₁), die über einen Stemkoppler miteinander verbunden sind, **dadurch gekennzeichnet, dass** die Eingangssignale des Sternkopplers in elektrischer Form vorliegen, dass der Sternkoppler ein logisches Entscheidungsglied (1) enthält, an dessen Eingänge die Ausgänge (Di_{_n}, Di_{_n+1}) der Teilnehmer angeschlossen sind und auf das die Eingangssignale geführt sind, dass der Ausgang des Entscheidungsglieds über eine elektrische Leitung (2) innerhalb des Sternkopplers parallel an den Eingängen (Doₙ, Doₙ₊₁) der Teilnehmer angeschlossen ist, dass zumindest ein Teil der Teilnehmer über eine optische Übertragungstrecke mit nach- bzw vorgeschaltetem opto-elektrischen Wandlern am Sternkoppler angeschlossen ist und dass zwischen dem Entscheidungsglied und den Eingängen der Teilnehmer eine einzige Signalaufbereitungsschaltung (SA) angeordnet ist, die das Ausgangssignal hinsichtlich der Pulsform modelliert.

2. Datenbus nach Anspruch 1, **dadurch gekennzeichnet, dass** die Signalaufbereitungsschaltung das Ausgangssignal des Entscheidungsglieds hinsichtlich der Pulsform an die Pulsform der Eingangssignale angleicht.

3. Datenbus nach Anspruch 1, **dadurch gekennzeichnet, dass** die Signalaufbereitungsschaltung die Anstiegsflanken des Ausgangssignals des Entscheidungsglieds abflacht.

## Claims

1. A data bus for a plurality of nodes (Tₙ, Tₙ₊₁), which are connected to one another via a star coupler, **characterised in that** the input signals of the star coupler are present in electrical form, **in that** the star coupler has a logical decision gate (1), to the inputs of which the outputs (Di_ₙ, Di_{_n+1}) of the nodes are connected and to which the input signals are routed, **in that** the output of the decision gate is connected in parallel to the inputs (Doₙ, Doₙ₊₁) of the nodes via an electrical line (2) inside the star coupler, **in that** at least some of the nodes are connected to the star coupler via an optical transmission segment with opto-electrical transducers connected downstream or upstream and **in that** a single signal conditioning circuit (SA) which models the output signal with respect to the pulse shape is arranged between the decision gate and the inputs of the nodes.

2. A data bus according to claim 1, **characterised in that** the signal conditioning circuit matches the output signal of the decision gate to the pulse shape of the input signals with respect to the pulse shape.

3. A data bus according to claim 1, **characterised in that** the signal conditioning circuit flattens the rising edges of the output signal of the decision gate.

## Revendications

1. Bus de données pour plusieurs participants reliés entre eux par un coupleur en étoile (K),
**caractérisé en ce que**
- les signaux d'entrée (Diₙ et Diₙ₊₁) du coupleur en étoile sont présents sous forme électrique, ce coupleur contenant un organe logique de décision (1) dont les entrées sont reliées aux sorties des participants, et qui reçoit des signaux d'entrée (Diₙ et Diₙ₊₁),
- la sortie de l'organe de décision dans le coupleur en étoile est raccordée aux entrées (Doₙ et Doₙ₊₁) par un conducteur électrique (2) monté en parallèle,
- au moins une partie des participants est raccordée par un chemin de transmission optique à des convertisseurs opto-électriques montés en amont ou en aval sur le couplage en étoile, et
- entre l'organe de décision et les entrées des noeuds, est monté un seul circuit de préparation du signal (SA) qui modélise le signal de sortie en ce qui concerne sa forme pulsée.

2. Bus de données selon la revendication 1,
**caractérisé en ce que**
le circuit de préparation du signal donne au circuit de sortie de l'organe de décision la même forme pulsée que celle des signaux d'entrée.

3. Bus de données selon la revendication 3,
**caractérisé en ce que**
le circuit de préparation du signal aplatit les flancs montants du signal de sortie de l'organe de décision.
